(19) Europäisches Patentamt
European Patent Office
Office européen des brevets

(11) Publication number: **0 177 098 B1**

(12) # EUROPEAN PATENT SPECIFICATION

(45) Date of publication of patent specification: **27.12.89**

(51) Int. Cl.$^4$: **B 01 F 17/12**, B 01 F 17/42, E 21 B 43/22

(21) Application number: **85201540.3**

(22) Date of filing: **25.09.85**

(54) **Surfactant composition and process for the production of oil using such a composition.**

(30) Priority: **05.10.84 GB 8425195**

(43) Date of publication of application: **09.04.86 Bulletin 86/15**

(45) Publication of the grant of the patent: **27.12.89 Bulletin 89/52**

(84) Designated Contracting States: **BE DE FR IT NL**

(56) References cited:
**EP-A-0 111 354**
**EP-A-0 121 964**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **Bolsman, Theodorus Antonius Benedictus Maria**
**Badhuisweg 3**
**NL-1031 CM Amsterdam (NL)**
Inventor: **Fernley, George William**
**Badhuisweg 3**
**NL-1031 CM Amsterdam (NL)**

(74) Representative: **Aalbers, Onno et al**
**P.O. Box 302**
**NL-2501 CH The Hague (NL)**

**EP 0 177 098 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

The invention relates to a surfactant composition for use in the production of oil and to a process for the production of oil from an underground oil-containing formation by injecting such a surfactant composition into said formation.

The efficient recovery of oil from an underground oil-containing formation is of great importance. The production of oil from such a formation is commenced by reducing the pressure prevailing in the formation. However it has long been recognized that substantial amounts of oil remain in the formation after the pressure has decreased. To enhance the oil production it has been proposed to inject water, steam or gases like nitrogen, carbon dioxide, $C_1$—$C_3$ hydrocarbons, oxygen or air, into the formation.

A very promising method for enhanced oil production comprises the injection of an aqueous surfactant-containing solution. It is assumed that the surfactant lowers the interfacial tension between oil and water. The lowering of the interfacial tension is often related to the formation of a three-phase system in the formation: an oil phase, a microemulsion phase and an aqueous (brine) phase containing substantially no surfactant. The microemulsion phase is a thermodynamically stable phase containing both oil and water and surfactant. The interfacial tension between oil and the microemulsion is considerably lower than the interfacial tension between oil and water or brine without surfactant.

Due to this lower interfacial tension the oil can be driven out of the pores in the formation where the oil was left after the pressure decrease.

The interfacial tension between the microemulsion phase and the aqueous (brine) phase is not very high, too, so that after having forced the oil out of the pores, the microemulsion in its turn is removed from the pores by the water. In this way the surfactant-containing microemulsion is used throughout the whole formation.

The formation of a three-phase system is highly dependent on the salinity of the brine present in the formation, using a given surfactant or surfactant blend. by means of brine samples it is possible to determine the salinity and to adjust the surfactant-containing solution such that in model experiments three phases are attained at the salinity found. However, upon passing a surfactant-containing solution through the formation the salinity may change, e.g. it is possible that salts from the formation dissolve in the injected solution, or that oil exchange occurs between cations in the solution and cations in the formation. It then may happen that the microemulsion is no longer stable and disappears, so that oil production is considerably reduced.

From the above it is evident that it is advantageous to apply a surfactant composition capable of creating a three-phase system in a salinity range as wide as possible.

The invention provides a surfactant composition capable of forming a three-phase system over a wide salinity range.

European non-prior published patent application 121964 describes a process for preparing an alkyl aryl sulphonate concentrate composition by neutralizing at least one alkyl aryl sulphonic acid of general formula

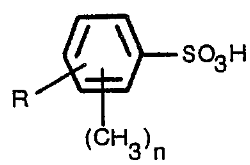

where n is 1 or 2 and R is a $C_8$—$_{18}$ alkyl group, with an equivalent amount of a neutralizing agent, which process comprises the steps of

a) mixing an aqueous solution containing at least 10 %w/w of the neutralizing agent with at least one $C_2$—$_9$ saturated alcohol, and

b) mixing the resulting mixture with the alkyl aryl sulphonic acid, the relative quantities of the aqueous solution and the at least one alcohol being such that the resulting neutralized mixture contains 5 to 40 parts by weight of the at least one alcohol per 100 parts by weight of alkyl aryl sulphonate salt. The process may include the further step c) of mixing the neutralized mixture from step b) with up to 100 parts by weight, based on the alkyl aryl sulphonate salt of an alcohol ethoxy acetate as a cosurfactant.

The invention relates to a surfactant composition for use in the production of oil from an oil-containing underground formation, comprising an alcohol alkoxy acetate of the general formula $RO(CH_2C(R^1)HO)_{n1}CH_2COOM$ in which R is an alkyl group having 6—20 carbon atoms, $R^1$ is hydrogen or a methyl group, M is a cation and n is a number in the range from 1 to 30 and an alkyl aryl sulphonate in the form of a salt in such quantities that the composition contains between 1 and 100 pbw of the alkyl aryl sulphonate per 100 pbw of the alcohol alkoxy acetate.

The alcohol alkoxy acetate boosts the compatibility of the surfactant composition with saline water, whereas the alkyl aryl sulphonate favours the oil-solubility.

The relative quantities of both surfactants mentioned above can be varied between the limits given, as

required by the salinity of the brine in the formation. Preferably, the composition contains between 10 and 100 pbw of the alkyl aryl sulphonate per 100 pbw of the alcohol alkoxy acetate, thereby increasing the salinity range in which three phases occur.

The surfactants in the composition are used and stored in the form of their salts, preferably their alkali metal, in particular sodium, salts. However use of the surfactants in the form of other salts, like the ammonium, alkylammonium or alkanolammonium salt, is also possible.

The alcohol moiety in the alcohol alkoxy acetate comprises 6 to 20 carbon atoms. The "alcohol moiety" does not only comprise aliphatic alcohols, but also alkylated phenols.

Suitable alkoxy groups are ethoxy and 1,2-propoxy, the ethoxy group being preferred. When the alcohol alkoxy acetate comprises ethoxy groups, the alcohol ethoxy acetate contains 1 to 30 ethoxy groups.

The alcohol ethoxy acetate is generally prepared via reaction of an alcohol ethoxylate with chloro acetic acid or by catalytic oxidation of an alcohol ethoxylate with oxygen in the presence of sodium hydroxide and a palladium-containing catalyst.

Suitable alkyl aryl sulphonates are those in which the aryl moiety comprises benzene, toluene or xylene. Preferred alkyl aryl sulphonates are $C_6$—$C_{20}$-alkyl xylene sulphonates. Even more preferred are latter sulphonates when derived from o-xylene. The length of the alkyl chain can be varied in accordance with the requirements set by the formation. The alkyl aryl sulphonates are conveniently prepared by alkylation of benzene, toluene or xylene with an olefin, followed by sulphonation and neutralization. So, according to the above preferred embodiments by "alkyl aryl sulphonate" compounds are understood, having the following general formula:

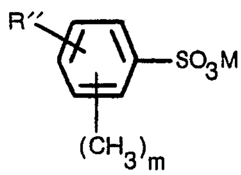

where m is 0, 1 or 2, R'' is a $C_6$—$C_{20}$ alkyl group and M is a cation, e.g. sodium or ammonium.

Advantageously, the surfactant composition comprises, apart from water, an alcohol as cosolvent. The quantity of the alcohol usually ranges up to 100 pbw per 100 pbw of the alcohol alkoxy acetate. Amongst others, the purpose of the alcohol is to reduce the viscosity of the microemulsion. The alcohol also increases the rate at which the equilibrium between the phases is reached. The nature of the alcohol is suitably such that it substantially does not interfere with the phase behaviour of the surfactant composition, when this composition is contacted with oil and brine. Not only linear alcohols are suited. Branched alcohols, too, show a good performance. The use of glycol derivatives like mono alkyl ethers of mono-, di- or triethylene glycol or of mono-, di-, or tripropylene glycol is also possible. Preferably the alcohol comprises 2 to 9 carbon atoms. In particular s-butanol and the butyl ether of ethylene glycol are preferred.

The surfactant composition is preferably stored and transported in the form of a concentrate. Near the oil field where it is used the composition is diluted with water to produce an aqueous surfactant-containing solution which solution is injected. During the dilution the salinity of the solution can be adjusted to the requirements of the formation. The term "surfactant composition" in the application does not only refer to a diluted aqueous solution but also to a concentrate. When the surfactant composition is stored or transported in a concentrated form, the alcohol alkoxy acetate and alkyl aryl sulphonate are typically present therein in a quantity of 60 %w, calculated on the total composition. The balance of the composition is then water and optionally the alcohol.

A concentrate of the surfactant composition is suitably prepared by mixing an aqueous solution containing at least 10 %w of sodium hydroxide with a $C_2$—$C_9$ alcohol and by neutralizing an alkyl aryl sulphonate acid with the mixture obtained and subsequently by adding an alcohol alkoxy acetate to the composition formed.

A preferred process for the preparation of such a surfactant composition comprises mixing an aqueous solution containing at least 10 %w of a neutralizing agent with a $C_2$—$C_9$ alcohol and by adding to this mixture an alcohol alkoxy acetic acid and subsequently an alkyl aryl sulphonate acid. As already indicated above, suitable $C_2$—$C_9$ alcohols are s-butanol and butyl ether of ethylene glycol. The neutralizing agent may conveniently be an ammonium or, preferably, an alkali metal hydroxide. Sodium hydroxide has been found to be very satisfactory.

The invention also relates to a process for the production of oil from an oil-containing underground formation by injecting a surfactant composition as defined above into said formation. The composition may suitably be used in well stimulation or in flooding processes.

The invention will now further be elucidated with reference to the following Examples.

Example 1

In a number of experiments properties were determined of a system comprising a Far Eastern crude

oil, a synthetic brine (indicated as synthetic reservoir water, SRW) and one or more surfactants. For each experiment a series of tests were run. In each test 1 meg surfactant was placed in a test-tube. To the surfactant(s) 0.1 g of s-butanol was added and the tube was filled with water and oil such that the volume ratio water to oil was 3:1. The total volume was 18 ml. In each tube water having a different salinity was applied.

The synthetic reservoir water was made up of a NaCl and $CaCl_2$ solution, the Na/Ca molar ratio being 231. The salinity is expressed in percentage SRW, 100% SRW corresponding with 10.0 g/l NaCl and 0.082 g/l $CaCl_2$.

The test-tube thus filled was gently moved, placed into a thermostat and kept there until no changes in the volumes of the phases were observed. By means of this procedure (sometimes referred to as salinity scan) it is possible to determine at which salinity a three-phase-system starts to occur, is present and stops to occur. The width of the salinity range in which a three-phase-system occurs is often called the salinity window (SW) and is generally expressed in % SRW. The tests were run at two different temperatures, corresponding with potential formation temperatures.

The following surfactants were used in the experiments: Surfactant I was a sodium alcohol ethoxy acetate in which the alcohol moiety comprised for 42 mol.% a linear $C_{12}$ chain and for 58 mol.% a linear $C_{13}$ chain, whereas the average number of ethoxy groups per molecule was 4.5.

Surfactant II was similar to Surfactant I but had an average number of 6 ethoxy groups per molecule.

Surfactant III was a sodium alcohol ethoxy acetate with an average of 9 ethoxy groups per molecule. The alcohol moiety comprised linear chains with 12 (20 mol.%), 13 (30 mol.%), 14 (30 mol.%) and 15 (20 mol.%) carbon atoms.

Surfactant IV was a sodium alkyl aryl sulphonate which was derived from o-xylene and which consisted for 40 %w of $C_8$—$C_{10}$ alkyl xylene sulphonate, for 35 %w of $C_{11}$—$C_{12}$ alkyl xylene sulphonate and for 25 %w of $C_{13}$—$C_{14}$ alkyl xylene sulphonate. The average molecular weight was 370. The alkyl aryl sulphonate is commercially available under the registered trade mark "Enordet LXS/370".

The results of the experiments are summarized in Table I.

TABLE I

| Exp. No. | Surfactant blend | Temperature °C | Salinity at which the three phase-system starts to occur % SRW | stops to occur % SRW | SW % Srw |
|---|---|---|---|---|---|
| 1 | 100 pbw I + | 67 | 150 | 215 | 65 |
| 2 | 233 pbw IV | 90 | 165 | 245 | 80 |
| 3 | 100 pbw I + | 67 | 375 | 475 | 100 |
| 4 | 79 pbw IV | 90 | 350 | 450 | 100 |
| 5 | 100 pbw I | 67 | turbid unspecific phases formed | | — |
| 6 | | 90 | no three phases formed | | — |
| 7 | 100 pbw II + | 67 | 210 | 285 | 75 |
| 8 | 203 pbw IV | 90 | 228 | 303 | 75 |
| 9 | 100 pbw II + | 67 | 575 | 750 | 175 |
| 10 | 69 pbw IV | 90 | 475 | 675 | 200 |
| 11 | 100 pbw II | 67 | turbid unspecific phases formed | | — |
| 12 | | 90 | no three phases formed | | — |

TABLE I (cont'd)

| Exp. No. | Surfactant blend | Temperature °C | Salinity at which the three phase-system starts to occur % SRW | stops to occur % SRW | SW % Srw |
|---|---|---|---|---|---|
| 13 | 100 pbw III + | 67 | 300 | 425 | 125 |
| 14 | 186 pbw IV | 94 | 275 | 450 | 175 |
| 15 | 100 pbw III + | 67 | 900 | 1050 | 150 |
| 16 | 61 pbw IV | 94 | <700 | 900 | >200 |
| 17 | 100 pbw III + | 67 | 1600 | 1770 | 170 |
| 18 | 18 pbw IV | 90 | 1150 | 1450 | 300 |
| 19 | 100 pbw III | 67 | turbid unspecific phases formed | | — |
| 20 | | 90 | no three phases formed | | — |

Of the experiments only experiments 3, 4, 9, 10, 15, 16, 17 and 18 are carried out with compositions according to the invention. In these experiments a relatively wide salinity window is observed. It is shown that using only alcohol ethoxy acetate the surfactant does not form a stable three-phase-system (cf. experiments 5, 6, 11, 12, 19 and 20). Using more than 100 pbw of alkyl aryl sulphonate per 100 pbw of alcohol ethoxy acetate the salinity window is becoming narrower (cf. experiments 1, 2, 7, 8, 13 and 14).

Example II

A concentrate of the surfactant composition was prepared by mixing 32 g of secondary butanol with a sufficient quantity of aqueous sodium hydroxide (concentration 46 %w). To this mixture was added with stirring 50 g of the alcohol ethoxy carboxylic acid (containing 85.3 %w pure acids). To the resultant blend was added with stirring 23 g of an alkyl aryl sulphonic acid (containing 94 %w pure acids). The resulting concentrate was a clear golden, mobile liquid.

A second concentrate was prepared in which the secondary butanol was replaced by the butyl ether of glycol. This concentrate was a clear, golden, mobile liquid.

Composition and viscosity of the two concentrates is given in Table II.

TABLE II

| Composition | 1 | 2 |
|---|---|---|
| Alcohol ethoxy acetate, Na Salt, pbw | 100 | 100 |
| Alkyl aryl sulphonate, Na salt, pbw | 51 | 51 |
| Secondary butanol, pbw | 71 | |
| Butyl ether of glycol, pbw | | 71 |
| Surfactant blend, %w, based on total composition | 57 | 57 |
| Water (including minor amounts of incidental components), %w | 16 | 16 |
| Viscosity, cSt, 20°C | 88 | 132 |

**Claims**

1. Surfactant composition for use in the production of oil from an oil-containing underground

formation, comprising an alcohol alkoxy acetate of the general formula $RO(CH_2C(R^1)HO)_nCH_2COOM$ in which R is an alkyl group having 6—20 carbon atoms, $R^1$ is hydrogen or a methyl group and M is a cation and n is a number in the range from 1 to 30 and an alkyl aryl sulphonate in the form of a salt in such quantities that the composition contains between 1 and 100 pbw of the alkyl aryl sulphonate per 100 pbw of alcohol alkoxy acetate.

2. Surfactant composition according to claim 1, which contains between 10 and 100 pbw of the alkyl aryl sulphonate per 100 pbw of the alcohol alkoxy acetate.

3. Surfactant composition according to claim 1 or 2, in which the alcohol alkoxy acetate and the alkyl aryl sulphonate are in the form of sodium salts.

4. Surfactant composition according to any one of claims 1—3, in which the alcohol moiety in the alcohol alkoxy acetate comprises 6 to 20 carbon atoms.

5. Surfactant composition according to any one of claims 1—4, in which the alcohol alkoxy acetate is an alcohol ethoxy acetate.

6. Surfactant composition according to claim 5, in which the alcohol ethoxy acetate contains 1 to 30 ethoxy groups.

7. Surfactant composition according to any one of claims 1—6, in which the alkyl aryl sulphonate is a $C_6$—$C_{20}$ alkyl xylene sulphonate.

8. Surfactant composition according to claim 7, in which the $C_6$—$C_{20}$ alkyl xylene sulphonate is derived from o-xylene.

9. Surfactant composition according to any one of claims 1—8, which contains up to 100 pbw of an alcohol per 100 pbw of alcohol alkoxy acetate.

10. Process for the preparation of a surfactant composition as claimed in claim 9, comprising mixing an aqueous solution containing at least 10 %w/w of a neutralizing agent with at least one $C_2$—$C_9$ saturated alcohol, and adding to the resulting mixture an alcohol alkoxy acetic acid and subsequently an alkyl aryl sulphonic acid.

11. Process for the production of oil from an oil-containing underground formation by injecting a surfactant composition according to any one of claims 1—10 into said formation.

**Patentansprüche**

1. Oberflächenaktive Masse zur Verwendung bei der Förderung von Öl aus einer ölführenden unterirdischen Formation, enthaltend ein Alkoholalkoxyacetat der allgemeinen Formel $RO(CH_2C(R^1)HO)_nCH_2COOM$, worin R eine Alkylgruppe mit 6 bis 20 Kohlenstoffatomen, $R^1$ ein Wasserstoffatom oder eine Methylgruppe und M ein Kation ist und n eine Zahl von 1 bis 30 bedeutet, sowie ein Alkylarylsulfonat in Form seines Salzes in einer solchen Menge, daß die Masse 1 bis 100 Gew.-Teile Alkylarylsulfonat auf 100 Gew.-Teile Alkoholalkoxyacetat aufweist.

2. Oberflächenaktive Masse nach Anspruch 1, enthaltend 10 bis 100 Gew.-Teile des Alkylarylsulfonats auf 100 Gew.-Teile Alkoholalkoxyacetat.

3. Oberflächenaktive Masse nach Anspruch 1 oder 2, in welcher das Alkoholalkoxyacetat und Alkylarylsulfonat in den jeweiligen Natriumsalzen vorliegen.

4. Oberflächenaktive Masse nach einem der Ansprüche 1 bis 3, wobei der Alkoholteil des Alkoholalkoxyacetats 6 bis 20 Kohlenstoffatomen enthält.

5. Oberflächenaktive Masse nach einem der Ansprüche 1 bis 4, worin das Alkoholalkoxyacetat ein Alkoholethoxyacetat ist.

6. Oberflächenaktive Masse nach Anspruch 5, worin das Alkoholethoxyacetat 1 bis 30 Ethoxygruppen enthält.

7. Oberflächenaktive Masse nach einem der Ansprüche 1 bis 6, worin das Alkylkarylsulfonat ein $C_6$- bis $C_{20}$-Alkylxylol-sulfonat ist.

8. Oberflächenaktive Masse nach Anspruch 7, worin sich das $C_6$- bis $C_{20}$-Alkylxylolsulfonat von o-Xylol ableitet.

9. Oberflächenaktive Masse nach einem der Ansprüche 1 bis 8, worin bis zu 100 Gew.-Teile eines Alkohols auf 100 Gew.-Teile Alkoholalkoxyacetat enthalten sind.

10. Verfahren zur Herstellung der oberflächenaktiven Masse nach Anspruch 9 durch Mischen einer wässrigen Lösung, enthaltend zumindest 10 Gew.-% eines Neutralisationsmittels, mit zumindest einem $C_2$- bis $C_9$-gesättigten Alkohol und Zugabe zu der erhaltenen Reaktionsmischung einer Alkoholalkoxyessigsäure und anschließend einer Alkylarylsulfonsäure.

11. Verfahren zur Förderung von Öl aus einer ölhaltigen unterirdischen Formation durch Injektion einer oberflächenaktiven Masse, entsprechend einem der Ansprüche 1 bis 10 in die Formation.

**Revendications**

1. Composition tensio-active pour application dans la production de pétrole à partir d'une formation souterraine contenant du pétrole, contenant un alkoxyacétate d'alcool de formule générale $RO(CH_2C(R^1)HO)_nCH_2COOM$ dans laquelle R est un groupe alcoyle en $C_6$ à $C_{20}$, $R^1$ est un hydrogène ou un groupe méthyle et M est un cation et n est un nombre situé dans un intervalle allant de 1 à 30 et un alcoyl-

aryl-sulfonate sous la forme d'un sel en des quantités telles que la composition contient entre 1 et 100 parties en poids de l'alcoyl-aryl-sulfonate pour 100 parties en poids d'alkoxy-acétate d'alcool.

2. Composition tensio-active selon la revendication 1, qui contient entre 10 et 100 pp de l'alcoyl-aryl-sulfonate pour 100 pp de l'alkoxy-acétate d'alcool.

3. Composition tensio-active selon la revendication 1 ou 2, dans laquelle l'alkoxy-acétate d'alcool et l'alcoyl-aryl-sulfonate sont sous forme de sels de sodium.

4. Composition tensio-active selon l'une quelconque des revendications 1—3, dans laquelle la fraction alcool dans l'alkoxy-acétate d'alcool comprend de 6 à 20 atomes de carbone.

5. Composition tensio-active selon l'une quelconque des revendications 1—4, dans laquelle l'alkoxy-acétate d'alcool est un éthoxy-acétate d'alcool.

6. Composition tensio-active selon la revendication 5, dans laquelle l'éthoxy-acétate d'alcool contient de 1 à 30 groupes éthoxy.

7. Composition tensio-active selon l'une quelconque des revendications 1—6, dans laquelle l'alcoyl-aryl-sulfonate est un alcoyl (en $C_6$ à $C_{20}$)-xylène-sulfonate.

8. Composition tensio-active selon la revendication 7, dans laquelle l'alcoyl (en $C_6$ à $C_{20}$)-xylène-sulfonate est dérivé du o-xylène.

9. Composition tensio-active selon l'une quelconque des revendications 1—8, qui contient jusqu'à 100 pp d'un alcool pour 100 pp d'alkoxy-acétate d'alcool.

10. Procédé de préparation d'une composition active selon la revendication 9, dans lequel on mélange une solution aqueuse contenant au moins 10% p/p d'un agent neutralisant avec au moins un alcool saturé en $C_2$ à $C_9$, et on ajoute au mélange résultant un acide alcool-alkoxy-acétique puis un acide alcoyl-aryl-sulfonique.

11. procédé de production de pétrole à partir d'une formation souterraine contenant du pétrole par injection d'une composition tensio-active selon l'une quelconque des revendications 1—10 dans ladite formation.